# EUROPÄISCHE PATENTSCHRIFT

(11) **EP 1 654 198 B1**
(45) Veröffentlichungstag und Bekanntmachung des Hinweises auf die Patenterteilung: **05.03.2008**
(21) Anmeldenummer: 04740416.5
(22) Anmeldetag: 29.06.2004
(51) Int. Cl.: C02F 1/32

(54) **VORRICHTUNG ZUR UV-BEHANDLUNG VON STRÖMENDEN FLUIDEN**
DEVICE FOR THE UV TREATMENT OF FLOWING FLUIDS
DISPOSITIF DE TRAITEMENT UV DE FLUIDES EN ECOULEMENT

(30) Priorität: 13.08.2003 DE 10337379
(43) Veröffentlichungstag der Anmeldung: 10.05.2006
(73) Patentinhaber: Wedeco AG, 40472 Düsseldorf (DE)
(72) Erfinder: RUDKOWSKI, Jan, Boris, 33615 Bielefeld (DE); DINKLOH, Ludwig, 32051 Herford (DE); NEITEMEIER, Dieter, 33803 Steinhagen (DE)
(74) Vertreter: LENZING GERBER
(86) Internationale Anmeldenummer: PCT/EP2004/007022
(87) Internationale Veröffentlichungsnummer: WO 2005/023717

(56) Entgegenhaltungen:
- WO-A-01/17906
- WO-A-01/17907
- WO-A-01/96823
- DE-U- 29 707 052
- US-B1- 6 459 087

## Beschreibung

Die vorliegende Erfindung betrifft eine Vorrichtung zur UV-Behandlung von strömenden Medien, insbesondere eine Vorrichtung zur UV-Desinfektion von Trinkwasser oder Abwasser mit den Merkmalen des Oberbegriffs des Anspruchs 1.

Gattungsgemäße Vorrichtungen sind aus der Praxis bekannt, beispielweise aus der Druckschrift US5, 368, 826, der US5, 660, 719, der EP0687201 und der WO00/40511.

Der allgemeine technische Hintergrund der vorliegenden Erfindung betrifft UV-Desinfektionsanlagen. Zunächst wird unterschieden zwischen UV-Desinfektionsanlagen mit Mitteldruckstrahlern, die nicht Gegenstand der vorliegenden Erfindung sind, und solchen Anlagen mit Quecksilber-Niederdruck-UV-Strahlern wie im Oberbegriff des Anspruchs 1 angegeben. Die Anlagen mit Mitteldruckstrahlern, wie beispielsweise in der WO 01/92839 A2 beschrieben, weisen üblicherweise wenige Strahlereinheiten auf, die sich durch eine hohe UV-Strahlungsleistung bei entsprechend höherer elektrischer Leistungsaufnahme auszeichnen. Da es sich hier um wenige Strahler handelt, ist eine separate Überwachung jedes einzelnen Strahlers ohne lers ohne weiteres möglich. Der Aufwand für diese Überwachung ist bei Mitteldruckstrahlern im Vergleich zum sonstigen finanziellen und apparativen Aufwand gering.

Bei Anlagen mit Niederdruckstrahlern ist eine erheblich größere Anzahl von Strahlern im Einsatz, die zwar jeweils eine geringere UV-Strahlungsleistung aufweisen, die aber zum einen gegenüber Mitteldruckstrahlern einen geringeren apparativen Aufwand erfordern und die zum anderen einen erheblich besseren Wirkungsgrad und damit geringere Betriebskosten aufweisen. Derartige Anlagen umfassen deshalb zum Teil mehrere hundert Strahler, die als sogenanntes Array in einem oder mehreren Strömungskanälen angeordnet sind. Diese Strahler werden üblicherweise im Neuzustand gemeinsam eingesetzt und in Betrieb genommen. Die Lebensdauer solcher Strahler beträgt ca. 8.000 bis 9.000 Betriebsstunden, also etwa ein Jahr. Nach dieser Zeit ist die Strahlungsleistung soweit abgesunken, dass die Strahler ausgetauscht werden müssen. Die abgegebene Strahlungsleistung wird von UV-Sensoren überwacht, die entweder das gesamte Array oder einzelne ausgewählte Module oder Gruppen des Arrays überwachen, so in den oben erwähnten Druckschriften US5,368,826, EP0687201 und WO00/40511. Eine Einzelüberwachung aller Strahler ist in diesen Druckschriften nicht vorgesehen. In der Praxis wird davon ausgegangen, dass alle Strahler gleichmäßig altern.

Ein Ansatz zur Überwachung einzelner Strahler ist in der US5,660,719 vorgeschlagen worden. Bei dieser Vorrichtung wird jeder Lampe eine Spule zugeordnet, die die elektromagnetische Strahlung des in Betrieb befindlichen Strahlers aus der Spannungsversorgung aufnimmt und die dann separat ausgewertet wird. Die abgegebene Strahlungsintensität selbst wird auch bei dieser Druckschrift über einen einzigen UV-Sensor für mehrere Strahler gemessen, so dass das Intensitätssignal nur für das Array insgesamt vorliegt, die Informationen aus der Betriebsspannung jedoch für jede einzelne Lampe vorliegt.

Eine Überwachung der individuellen Strahlungsleistung jedes einzelnen Strahlers ist hiermit jedoch nur mittelbar möglich, da aus dem Verlauf der Versorgungsspannung nicht in eindeutiger Weise auf die abgegebene UV-Strahlung geschlossen werden kann. So ist beispielsweise denkbar, dass bei einem elektrisch und von der Gasfüllung her vollkommen intakten Strahler das Strahlerrohr oder das den Strahler umgebende Hüllrohr nur eine eingeschränkte UV-Transparenz aufweist und deshalb die zur Verfügung stehende UV-Strahlung geringer ist als nach den elektrischen Parametern angenommen wird.

Es ist deshalb Aufgabe der vorliegenden Erfindung, eine Vorrichtung zur UV-Behandlung von strömenden Medien zu schaffen, bei der viele Quecksilberniederdruckstrahler hinsichtlich ihrer Strahlungsleistung einzeln überwacht werden, aber der Wartungsaufwand gering gehalten werden soll.

Diese Aufgabe wird von einer Vorrichtung mit den Merkmalen des Anspruchs 1 gelöst.

Zunächst sollen die zur Abgrenzung gegenüber dem Stand der Technik verwendeten Begriffe definiert werden. Im Folgenden ist unter dem Begriff Sensormittel die Gesamtheit der Sensoren mit allen verwendeten Übertragungsgliedern zu verstehen, die von der Erfassung der UV-Strahlung bis zur Übermittlung eines elektrischen (gegebenenfalls'digitalen) Signals an eine Steuerungs-, Regelungs- oder Überwachungseinheit vorgesehen sind. Unter dem Begriff Sensoranordnung ist eine Anordnung von mehreren Sensoren zu verstehen, die in einer gemeinsamen baulichen Einheit zusammengefasst sind und die einer bestimmten Gruppe von Strahlern zugeordnet werden können. Ein Sensor ist im Zusammenhang der vorliegenden Erfindung ein Halbleiterdetektor für UV-Strahlung, also beispielsweise eine Siliziumcarbid (SiC)-Diode. Eine Gruppe von Strahlern ist zu verstehen als eine Anordnung von mehreren stabförmigen Quecksilberniederdruck-UV-Strahlern, die im wesentlichen parallel zueinander und in einer Ebene liegen. Diese Gruppe kann vorzugsweise elektrisch und/oder mechanisch miteinander verbunden sein, so lektrisch und/oder mechanisch miteinander verbunden sein, so dass mehrere Gruppen ein Array bilden.

Die bereits erwähnte Aufgabe wird von einer Vorrichtung mit den Merkmalen des Anspruchs 1 gelöst, weil die Sensormittel wenigstens eine langgestreckte Sensoranordnung umfassen, die parallel zu einer der Gruppen von Strahlern des Arrays und beabstandet von der Gruppe angeordnet ist, wobei sich die Sensoranordnung im wesentlichen quer zu den Längsachsen der Strahler der benachbarten Gruppe erstreckt und ein separater UV-Sensor für jeden Strahler der Gruppe vorgesehen ist. So ist mit dem Einbau einer Sensoranordnung in die Vorrichtung eine komplette Gruppe von Strahlern einzeln zu überwachen. Vorteilhaft ist die Sensoranordnung in einem Quarzrohr angeordnet, was hinsichtlich der UV-Transparenz und der mechanischen Stabilität sowie die Wasserdichtigkeit eine aus dem Bereich der UV-Strahler bewährte Technologie ist. Die Strahler selbst sind bei einer erfindungsgemäßen Vorrichtung vorzugsweise quer zu der Strömungsrichtung in dem Strömungskanal angeordnet. Bei diesen Anordnungen ist eine gute Verwirbelung des strömenden Fluides sichergestellt, wobei sich ein größerer Strömungswiderstand aufbaut als bei längs zur Strömung angeordneten Strahlern. Hinsichtlich der Strömungseigenschaften stellt der Einbau der Sensoranordnungen hier keine wesentliche Veränderung dar. Die Sensoranordnungen können insbesondere auch quer zu der Strömungsrichtung in den Strömungskanal angeordnet sein, so dass die elektrischen Anschlüsse und die mechanischen Halterungen seitlich in den Strömungskanal vorgesehen sein können.

Vorzugsweise weist die jeweilige Sensoranordnung eine Trägerplatte auf, die die UV-Sensoren trägt. Die Trägerplatte kann zugleich eine Leiterplatte sein. Der bauliche Aufwand und der Einfluss auf die Strömungsverhältnisse in der Vorrichtung wird verringert, wenn die Sensoranordnung zwischen zwei Strahlergruppen angeordnet ist und die Trägerplatte der Sensoranordnung auf zwei aneinander abgewandten Flachseiten jeweils UV-Sensoren trägt, die jeweils einer Gruppe zugewandt sind. So kann eine Sensoranordnung individuelle UV-Sensoren für jeden Strahler von insgesamt zwei benachbarten Strahlergruppen tragen. Für zwei Gruppen ist dann nur der Einbau einer Sensoranordnung erforderlich.

Jeder UV-Sensor kann vorteilhaft mit einem eigenen Strom/Spannungswandler oder allgemein mit einem Verstärker und einem Digitalbaustein versehen sein, wobei die Sensoren einer Sensoranordnung über einen gemeinsamen Datenbus mit der Steuerungseinheit kommunizieren. Die Verstärkung und Umwandlung des Signals in ein busfähiges Digitalsignal minimiert den erheblichen Einfluss der elektromagnetischen Strahlung im Radiofrequenzbereich, die von den verwendeten UV-Strahlern ausgeht.

Eine vorteilhafte Kalibrierung der Sensoren insgesamt wird ermöglicht, wenn außerhalb der Sensormittel ein Führungssensor vorgesehen ist, der die von den UV-Strahlern abgegebene UV-Strahlung erfasst und gegen den die einzelnen UV-Sensoren kalibrierbar sind. Damit können bei der ersten Inbetriebnahme oder nach einer gewissen Einbrenndauer alle Sensoren auf einen 100%-Wert der erfassten UV-Strahlung kalibriert werden.

Im Folgenden wird ein Ausführungsbeispiel der vorliegenden Erfindung anhand der Zeichnung beschrieben. Es zeigen:
- Figur 1:: ein Strahlerarray mit einer Vielzahl von UV-Strahlern und zugeordneten Sensoranordnungen;
- Figur 2:: eine Sensoranordnung gemäß Figur 1 in einer vergrößerten Darstellung;
- Figur 3:: eine Sensoranordnung gemäß Figur 2 in einem Querschnitt entlang der Linie III-III; sowie
- Figur 4:: eine Sensoranordnung in einem Querschnitt gemäß Figur 3 mit zweiseitig ausgerichteten UV-Sensoren.

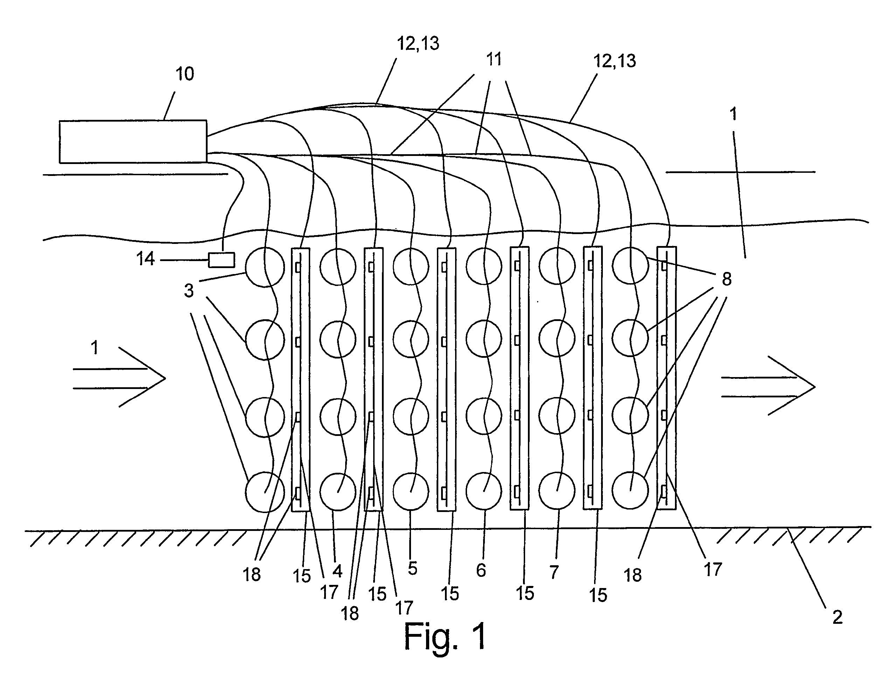

In der Figur 1 ist eine Vorrichtung zur Desinfektion von strömenden Medien schematisch dargestellt. Ein Abwasserstrom 1 ist in einem Strömungskanal 2 geführt. In diesem Strömungskanal ist eine Anzahl von UV-Strahlern 3, 4, 5, 6, 7, 8 angeordnet. Die UV-Strahler 3 bis 8 sind von der Bauart eines Quecksilberniederdruckstrahlers. Sie sind im wesentlichen rohrförmig und erstrecken sich in der Darstellung gemäß Figur 1 senkrecht zur Zeichenebene, d. h. quer zur Strömungsrichtung des Abwassers 1.

Eine außerhalb des Strömungskanals angeordnete Steuer- und Regelungseinheit 10 beaufschlagt die UV-Strahler 3 bis 8 über Versorgungsleitungen 11 mit der Versorgungsspannung, die in an sich bekannter Weise geregelt ist.

Die Strahler sind bei diesem Ausführungsbeispiel zu Gruppen von jeweils vier Strahlern zusammengefasst, die gemeinsam über jeweils ein Kabelbündel gespeist werden und dadurch mechanisch gruppiert sind. Es kann aber auch vorgesehen sein, dass jeder Strahler einzeln versorgt wird oder dass die Gruppen nicht in einer vertikalen Spalte wie bei diesem Ausführungsbeispiel, sondern horizontal zeilenweise gebildet werden.

Neben jeweils einer senkrechten Gruppe von Strahlern 3 bis 8 ist eine über Datenleitungen 12, 13 gespeiste und ausgewertete Sensoranordnung 15 vorgesehen. Ein Führungssensor 14 erfasst die insgesamt abgegebene UV-Strahlung des Strahlerarrays 3 bis 8.

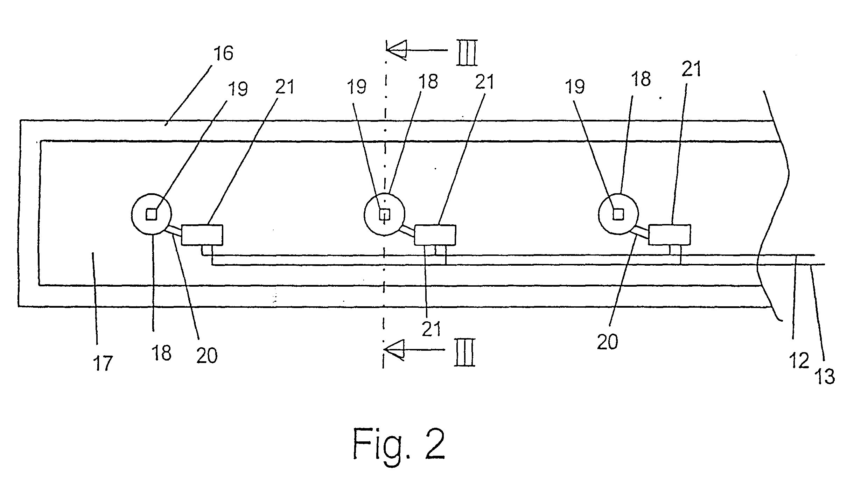

Die Sensoranordnung 15 ist in der Figur 2 näher dargestellt. Sie umfasst ein äußeres Hüllrohr 16 sowie eine Trägerplatte 17, auf der UV-Sensoren 18 angeordnet sind. Jeder UV-Sensor 18 hat einen UV-lichtempfindlichen Bereich 19, der in an sich bekannter Weise aus einem SiC-Kristall besteht. Anschlussleitungen 20 verbinden den UV-Sensor 19 mit einem nachgeschalteten Digitalbaustein 21, der sowohl einen Strom/Spannungswandler als auch einen Mikrokontroller enthält.

Der Baustein 21 jedes UV-Sensors ist an zwei Busleitungen 12, 13 angeschlossen, über die Spannungsversorgung und die Kommunikation mit der externen Einheit 10 erfolgt.

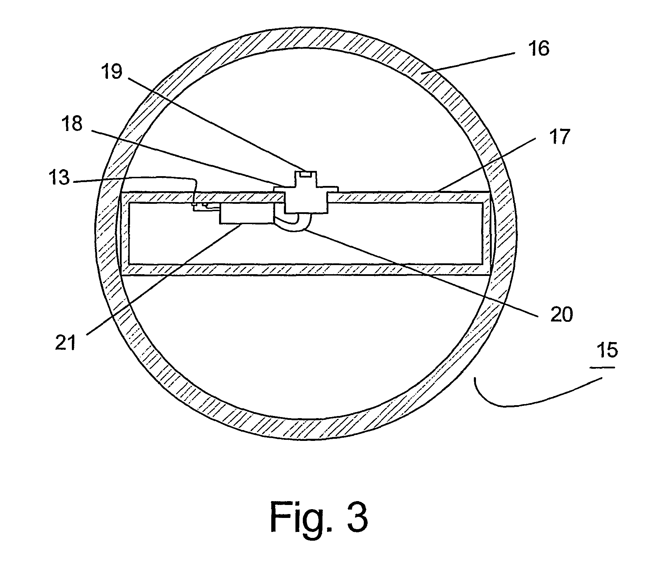

Die Figur 3 zeigt einen Querschnitt durch die Sensoranordnung aus Figur 2 etwa entlang der Linie III-III.

Es ist ersichtlich, dass das Hüllrohr 16 einen kreisrunden Querschnitt hat und im inneren des Hüllrohrs 16 die Trägerplatte 17 als ein rechteckiges Hohlprofil ausgebildet ist. Dieses Hohlprofil trägt den UV-Sensor 18 derart, dass der lichtempfindliche Bereich 19 nach außen gewandt ist, während die Leitungen 20 und der Digitalbaustein 21 sowie die Busleitungen 12, 13 innerhalb der Trägerplatte 17 verlaufen.

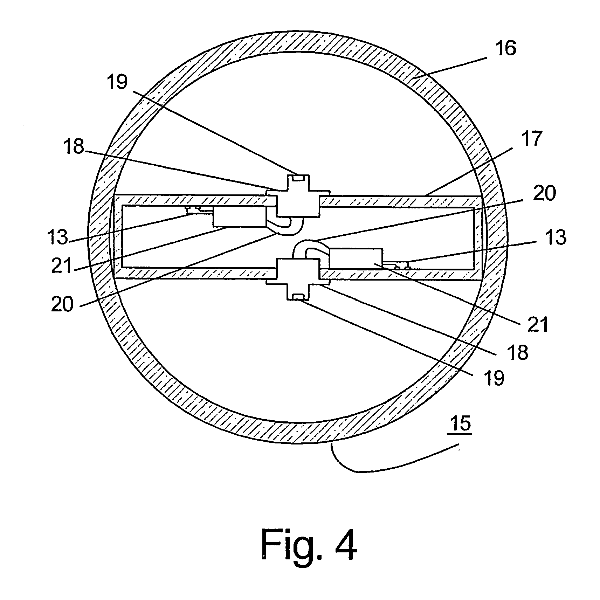

Die Figur 4 zeigt ein weiteres Ausführungsbeispiel einer Sensoranordnung im Zusammenhang der vorliegenden Erfindung. Bei diesem Ausführungsbeispiel sind insgesamt zwei UV-Sensoren 18 im Bereich der Querschnittsebene III-III angeordnet. Die UV-Sensoren sind so ausgerichtet, dass ihre beiden lichtempfindlichen Bereiche 19 diametral entgegengesetzt orientiert sind. Die Leitungen 12, 13, 20 und der Digitalbaustein 21 sind jeweils für beide UV-Sensoren 19 im inneren der Trägerplatte 17 angeordnet.

In der Praxis arbeitet die insoweit beschriebene Vorrichtung wie folgt. Das strömende Medium ist beispielsweise der Abfluss einer Kläranlage, also bereits mechanisch und biologisch geklärtes Abwasser, welches noch Mikroorganismen enthält. Die Mikroorganismen wandern in der Abwasserströmung 1, die in dem Strömungskanal 2 verläuft, in Strömungsrichtung, also in der Figur 1 von links nach rechts. Der Wasserstrom passiert die quer zur Strömungsrichtung angeordneten Strahler 3 und nachfolgend die weiteren Strahlergruppen 4, 5, 6, 7 und 8, bevor er in den Auslauf der Kläranlage eintritt. Die Strahler 3 bis 8 werden von dem Steuergerät 1 derart mit Betriebsspannung beaufschlagt, dass sie eine UV-Strahlung in dem für die Desinfektion von Mikroorganismen relevanten Wellenlängenbereich (ca. 254 nm) abgeben. Die Intensität ist dabei so gewählt, dass eine sichere Desinfektion nach passieren der Strahleranordnung eintritt. Dabei wird die Anlage so ausgelegt, dass alle Strahler 3 bis 8 gleichzeitig in Betrieb sind. Bei Anlagen mit variablem Wasserstand kann vorgesehen sein, die obere Zeile der Strahler abzuschalten, wenn diese trocken fallen. Diese Regelung ist aus dem Stand der Technik bekannt.

Die einzelnen Strahler sind dabei so aufgebaut, dass ein Strahlerelement in einem Hüllrohr angeordnet ist und über die gesamte Länge der UV-Licht emittierenden Gassäule in den Strömungskanal 2 strahlt. Der Aufbau der Strahler 3 bis 8 ist aus dem Stand der Technik ebenfalls bekannt.

In Strömungsrichtung gesehen ist hinter jeder Gruppe von Strahlern eine Sensoranordnung 15 derart angeordnet, dass die für UV-Licht empfindlichen Bereich 19 der UV-Sensoren 18 auf den jeweils benachbarten, stromaufwärtsliegenden Strahler ausgerichtet sind. Der einzelne Sensor 18 empfängt also Licht von seinem unmittelbar benachbarten Strahler und kann so detektieren, ob und mit welcher Strahlungsleistung der Strahler arbeitet. Da für jeden Strahler ein individueller UV-Sensor 18 vorgesehen ist, und weil alle Sensoren 18 über ein Bussystem 12, 13 mit dem Steuergerät 10 kommunizieren, liegen in diesem Steuergerät alle Informationen vor, die eine Überprüfung jedes einzelnen Strahlers hinsichtlich Betriebszustand und Leistungsfähigkeit erlauben. Insbesondere kann auch festgestellt werden, ob die das einzelne Strahlerelement umgebenden Hüllrohre möglicherweise getrübt sind.

Zur Kalibrierung der einzelnen Sensorelemente 18 wird im Neuzustand der Strahler 3 bis 8 die Strahlungsintensität mit dem Führungssensor 14 erfasst und diese Strahlensintensität als 100%-Wert für die einzelnen Sensoren 18 abgespeichert. Eine Abweichung von diesem Sollwert ist dann zu detektieren. Dabei kann genau unterschieden werden, ob die Strahler insgesamt altern und so die UV-Intensität für alle Strahler gleichmäßig zurückgeht oder ob bei einem individuellen Strahler die abgegebene Strahlungsleistung stärker variiert als bei den übrigen Strahlern. Der letztgenannte Befund ist ein Kriterium für einen möglicherweise vorzeitig erforderlichen Austausch des betreffenden Strahlers.

Die Ausrichtung der UV-lichtempfindlichen Bereiche 19 auf die individuellen Strahler gewährleistet auch, dass die Streustrahlung der übrigen UV-Strahler das zu detektierende Signal jedes einzelnen Strahlers nicht überdeckt. Der Intensitätsanteil des unmittelbar benachbarten Strahlers am Gesamtsignal ist in jedem Falle ausreichend groß. Der genaue Anteil kann über eine geeignete Programmierung der Steuereinheit 10 ermittelt werden, indem beispielsweise bei laufendem Betrieb aller Strahler 3 bis 8 ein einzelner Strahler ausgeschaltet wird und die Veränderung der UV-Intensität bzw. des vom Sensor 18 abgegebenen Signals für diesen Strahler bestimmt wird. Dieser Vorgang kann für alle Strahler 3 bis 8 wiederholt werden.

Eine vereinfachte Anordnung ergibt sich, wenn die beidseitig sensitive Sensoranordnung gemäß Figur 4 zum Einsatz kommt. Dann kann eine solche Sensoranordnung zwei Gruppen von Strahlern gleichzeitig überwachen. Es ist dann beispielsweise möglich mit einer Sensoranordnung die Reihen 3 und 4, mit einer zweiten Sensoranordnung die Reihen 5 und 6 und mit einer dritten Sensoranordnung die Reihen 7 und 8 zu überwachen, so dass insgesamt drei Sensoranordnungen statt der sechs Sensoranordnungen gemäß Figur 1 erforderlich sind.

Die Sensoranordnungen, wie sie in den Figuren 2, 3 und 4 dargestellt sind, weisen eine hohlprofilartige Trägerplatte 17 auf. Dieses Hohlprofil kann aus einem metallischen Werkstoff (z. B. Aluminium) gefertigt sein. Dieser Werkstoff hat den Vorteil, dass das Innere mit den darin angeordneten Leitungen 12, 13 und 20 sowie mit dem digitalen Bauelement 21 gegenüber einer elektromagnetischen Umgebungsstrahlung im Radiofrequenzbereich abgeschirmt ist. Gerade diese Emissionen im Radiofredie Sensoranordnungen, die unerwünscht sind. Die Signalverarbeitung wird außerdem dadurch erleichtert und verbessert, dass das Ausgangssignal der UV-Sensoren 18 in unmittelbarer Nähe des jeweiligen Sensors bereits digitalisiert vorliegt.

Es ist auch ersichtlich, dass die relative Anordnung in der Figur 1 nur ein Ausführungsbeispiel darstellt. Ebenso wäre es möglich, die jeweiligen Sensoranordnungen 15 mit je sechs UV-Sensoren 18 zu versehen und die Sensoranordnungen dann horizontal zwischen zwei Zeilen von Strahlern anzuordnen.

## Patentansprüche

1. Vorrichtung zur UV-Behandlung von in einem Strömungskanal (2) strömenden Fluiden, mit einer Anzahl von zylindrischen Quecksilberniederdruck-UV-Strahlern (3-8), die in dem Strömungskanal (2) gruppenweise und mit ihren Längsachsen parallel zueinander derart angeordnet sind, dass eine Gruppe (3-8) mehrere in einer Ebene angeordnete Strahler umfasst, mit Sensormitteln zur Überwachung des Betriebszustandes der Strahler, sowie mit wenigstens einer mit den Sensormitteln verbundenen Einheit zur Steuerung, Regelung- und/oder Überwachung der Strahler, **dadurch gekennzeichnet, dass** die Sensormittel wenigstens eine langgestreckte Sensoranordnung (15) mit einem separaten UV-Sensor (19) für jeden Strahler der Gruppe umfassen, die parallel zu einer der Gruppen (3-8) und beabstandet von der Gruppe (3-8) angeordnet ist, wobei sich die Sensoranordnung (15) quer zu den Längsachsen der Strahler der benachbarten Gruppe (3-8) erstreckt.

2. Vorrichtung nach Anspruch 1, **dadurch gekennzeichnet, dass** die Sensoranordnung in einem Quarzrohr angeordnet ist.

3. Vorrichtung nach einem der vorhergehenden Ansprüche, **dadurch gekennzeichnet, dass** die Strahler Strahler quer zu der Strömungsrichtung in dem Strömungskanal angeordnet sind.

4. Vorrichtung nach einem der vorhergehenden Ansprüche,
**dadurch gekennzeichnet, dass** die Sensoranordnungen quer zu der Strömungsrichtung in dem Strömungskanal angeordnet sind.

5. Vorrichtung nach einem der vorhergehenden Ansprüche,
**dadurch gekennzeichnet, dass** die wenigstens eine Sensoranordnung eine Trägerplatte aufweist, die die UV-Sensoren trägt.

6. Vorrichtung nach einem der vorhergehenden Ansprüche,
**dadurch gekennzeichnet, dass** die Sensoranordnung zwischen zwei Gruppen angeordnet ist und dass die Trägerplatte der wenigstens einen Sensoranordnung auf zwei einander abgewandten Flachseiten jeweils UV-Sensoren trägt, die jeweils einer Gruppe zugewandt sind.

7. Vorrichtung nach einem der vorhergehenden Ansprüche,
**dadurch gekennzeichnet, dass** jeder UV-Sensor mit einem Strom/Spannungswandler und einem Digitalbaustein versehen ist, und dass die Sensoren einer Sensoranordnung über einen gemeinsamen Datenbus mit der Einheit kommunizieren.

8. Vorrichtung nach einem der vorhergehenden Ansprüche,
**dadurch gekennzeichnet, dass** wenigstens ein außerhalb der Sensormittel angeordneter Führungssensor vorgesehen ist, der die von den UV-Strahlern abgegebene UV-Strahlung erfasst und gegen den die einzelnen Sensoren kalibrierbar sind.

## Claims

1. Device for the UV treatment of fluids flowing in a flow channel (2), comprising a number of cylindrical low-pressure mercury UV radiators (3 to 8), which are arranged in the flow channel (2) in groups and with their longitudinal axes parallel to one another in such a way that one group (3 to 8) comprises a plurality of radiators arranged in a plane, with sensor means for monitoring the operating state of the radiators, as well as with at least one unit connected to the sensor means for controlling, regulating and/or monitoring the radiators, **characterised in that** the sensor means comprise at least one elongated sensor arrangement (15) with a separate UV sensor (19) for each radiator of the group, which sensor arrangement is arranged parallel to one of the groups (3 to 8) and spaced apart from the group (3 to 8), the sensor arrangement (15) extending transverse to the longitudinal axes of the radiators of the adjacent group (3 to 8).

2. Device according to claim 1, **characterised in that** the sensor arrangement (15) is arranged in a quartz tube.

3. Device according to any one of the preceding claims, **characterised in that** the radiators are arranged transverse to the flow direction in the flow channel.

4. Device according to any one of the preceding claims, **characterised in that** the sensor arrangements are arranged transverse to the flow direction in the flow channel.

5. Device according to any one of the preceding claims, **characterised in that** the at least one sensor arrangement has a support plate, which carries the UV sensors.

6. Device according to any one of the preceding claims, **characterised in that** the sensor arrangement is arranged between two groups and **in that** the support plate of the at least one sensor arrangement in each case carries, on two flat sides remote from one another, UV sensors, which in each case face one group.

7. Device according to any one of the preceding claims, **characterised in that** each UV sensor is provided with a current/voltage transformer and a digital module, and **in that** the sensors of one sensor arrangement communicate with the unit via a common data bus.

8. Device according to any one of the preceding claims, **characterised in that** at least one guide sensor arranged outside the sensor means is provided, which detects the UV radiation emitted by the UV radiators and against which the individual sensors can be calibrated.

## Revendications

1. Dispositif pour le traitement par UV de fluides circulant dans un canal d'écoulement (2), comprenant un nombre d'émetteurs de rayonnement UV à basse pression de mercure cylindriques (3-8), qui sont disposés dans le canal d'écoulement (2) par groupes et avec leurs axes longitudinaux parallèlement entre eux, de telle sorte qu'un groupe (3-8) comprend plusieurs dispositifs de rayonnement disposés dans un plan, avec des moyens de détection pour le contrôle de l'état de service des sources de rayonnement, et au moins une unité reliée aux moyens de détection pour la commande, le réglage et/ou le contrôle des sources de rayonnement, **caractérisé en ce que** les moyens de détection comprennent au moins un dispositif de détection (15) étiré en longueur avec un capteur UV (19) séparé pour chaque source de rayonnement du groupe, qui est disposé parallèlement à l'un des groupes (3-8) et à distance du groupe (3-8), le dispositif de détection (15) s'étendant transversalement aux axes longitudinaux des sources de rayonnement du groupe (3-8) voisin.

2. Dispositif selon la revendication 1, **caractérisé en ce que** le dispositif de détection (15) est disposé dans un tube en quartz.

3. Dispositif selon l'une quelconque des revendications précédentes,
**caractérisé en ce que** les sources de rayonnement sont disposées transversalement à la direction d'écoulement dans le canal d'écoulement.

4. Dispositif selon l'une quelconque des revendications précédentes,
**caractérisé en ce que** les dispositifs de détection sont disposés transversalement à la direction d'écoulement dans le canal d'écoulement.

5. Dispositif selon l'une quelconque des revendications précédentes,
**caractérisé en ce que** le au moins un dispositif de détection présente une plaque support qui porte les capteurs UV.

6. Dispositif selon l'une quelconque des revendications précédentes, **caractérisé en ce que** le dispositif de détection est disposé entre deux groupes et **en ce que** la plaque porteuse du au moins un agencement de détection du dispositif de détection portent sur deux côtés plats opposés l'un à l'autre à chaque fois des capteurs UV qui sont attribués respectivement à un groupe.

7. Dispositif selon l'une quelconque des revendications précédentes,
**caractérisé en ce que** chaque capteur UV est doté d'un convertisseur de courant/tension et d'un module numérique et **en ce que** les capteurs d'un agencement de détection communiquent avec l'unité au moyen d'un bus de données commun.

8. Dispositif selon l'une quelconque des revendications précédentes,
**caractérisé en ce qu'**il est prévu au moins un capteur de guidage disposé à l'extérieur des moyens de détection qui enregistre le rayonnement UV émis par les sources de rayonnement UV et par rapport auquel les capteurs individuels peuvent être étalonnés.
